# EUROPÄISCHE PATENTANMELDUNG

(11) **EP 4 439 453 A1**
(43) Veröffentlichungstag der Anmeldung: **02.10.2024**
(21) Anmeldenummer: 24160960.1
(22) Anmeldetag: 01.03.2024
(51) Int. Cl.: G06T 7/00, B30B 11/08, B30B 15/06, B30B 15/26, B30B 11/00

(54) **VERFAHREN UND VORRICHTUNG ZUM BEWERTEN DES ZUSTANDS EINES PRESSSTEMPELS**

(30) Priorität: 30.03.2023 DE 102023108106
(71) Anmelder: Fette Compacting GmbH, 21493 Schwarzenbek (DE)
(72) Erfinder: Vulp, Sven, 21514 Klein Pampau (DE); Herrmann, Janis, 23966 Wismar (DE); Naeve, Jan, 23899 Gudow (OT Kehrsen) (DE); Jasper, Tim, 29593 Schwienau (DE)
(74) Vertreter: Hauck Patentanwaltspartnerschaft mbB

(57) **Zusammenfassung**

Die Erfindung betrifft ein Verfahren zum Bewerten des Zustands eines Pressstempels einer Rundläuferpresse, wobei der Pressstempel einen Stempelschaft (10) aufweist, an dessen einem Ende ein im Betrieb mit einer Druckeinrichtung der Rundläuferpresse zusammenwirkender Stempelkopf (12) und an dessen anderem Ende eine im Betrieb ein Material in einer Kavität einer Matrizenscheibe der Rundläuferpresse zu einem Pressling verpressende Stempelspitze (14) angeordnet ist, wobei das Verfahren die folgenden Schritte umfasst:
• mit einer Kamera (22) wird ein Bild mindestens eines Abschnitts des Pressstempels aufgenommen,
• das aufgenommene Bild wird einer Auswerteeinrichtung (26) zugeführt,
• die Auswerteeinrichtung führt mittels eines Bildverarbeitungsalgorithmus eine Zustandsanalyse mindestens eines Abschnitts des Presstempels durch und bewertet auf Grundlage der Zustandsanalyse den Zustand des Pressstempels,
• sofern der durch die Auswerteeinrichtung bewertete Zustand des Pressstempels außerhalb eines zulässigen Bereichs liegt, gibt die Auswerteeinrichtung eine Warnmeldung aus.

Die Erfindung betrifft außerdem eine Vorrichtung zur Durchführung des Verfahrens.

## Beschreibung

Die Erfindung betrifft ein Verfahren zum Bewerten des Zustands eines Pressstempels einer Rundläuferpresse, wobei der Pressstempel einen Stempelschaft aufweist, an dessen einem Ende ein im Betrieb mit einer Druckeinrichtung der Rundläuferpresse zusammenwirkender Stempelkopf und an dessen anderem Ende eine im Betrieb ein Material in einer Kavität einer Matrizenscheibe der Rundläuferpresse zu einem Pressling verpressende Stempelspitze angeordnet ist. Die Erfindung betrifft außerdem eine Vorrichtung zum Durchführen des Verfahrens.

In Rundläuferpressen ist regelmäßig eine Vielzahl von oberen und unteren Pressstempeln vorgesehen, die paarweise jeweils einer Kavität einer Matrizenscheibe zugeordnet sind. Im Betrieb der Rundläuferpresse drehen die oberen und unteren Pressstempel gemeinsam mit der Matrizenscheibe, wobei ihre axiale Bewegung durch Steuerkurven gesteuert und durch obere und untere Stempelführungen geführt wird. Im Zuge der Drehung durchläuft die Matrizenscheibe verschiedene Einrichtungen der Rundläuferpresse, nämlich eine Fülleinrichtung, in der zu verpressendes Material, insbesondere Pulvermaterial, in die Kavitäten der Matrizenscheibe gefüllt wird und eine Druckeinrichtung, in der die oberen und unteren Pressstempel insbesondere durch obere und untere Druckrollen zum Verpressen des Materials zu Presslingen, wie Tabletten, in die Kavitäten gedrückt werden. Nachfolgend zu der Druckeinrichtung werden die oberen Pressstempel nach oben aus den Kavitäten geführt und die in den Kavitäten erzeugten Presslinge werden durch die unteren Pressstempel auf die Oberseite der Matrizenscheibe geschoben. Beispielsweise durch einen Abstreifer werden die Presslinge anschließend von der Matrizenscheibe in einen Ausgang der Rundläuferpresse abgestreift, von wo sie einer weiteren Verarbeitung zugeführt werden.

Rundläuferpressen werden mit hohen Rotordrehzahlen und entsprechend hohen Produktionsgeschwindigkeiten betrieben. Im Zuge der großen Anzahl von Pressvorgängen kommt es zu Verschleiß der Pressstempel. Neben einem Verschleiß der Stempelköpfe durch ihre Interaktion mit den Druckrollen kommt es auch zu einem Verschleiß der das Material in den Kavitäten verpressenden Stempelspitzen, beispielsweise durch abrasives Material oder andere Verschleißszenarien. Ein Verschleiß oder eine Beschädigung der Stempel spitzen kann zu inakzeptablen Spezifikationen der hergestellten Presslinge führen.

Es ist bekannt, den Verschleiß der Stempelköpfe mithilfe von Presskraftkurven zu analysieren und zu bewerten. Ein Verschleiß der Stempel spitzen kann mit diesem Verfahren nur schwierig oder gar nicht bewertet werden. Der Grund ist, dass ein Verschleiß der Stempel spitze, zum Beispiel eine Veränderung eines Radius der Stempelspitze oder eines abgeflachten Rands der Stempelspitze sich nur geringfügig auf den Presskraftverlauf auswirken. Derartige Veränderungen der Stempelspitze haben allerdings erheblichen Einfluss auf den Produktionsprozess der Presslinge und somit auf deren Qualität.

Es ist üblich, den Zustand von Pressstempeln durch visuelle Begutachtung zu beurteilen. Diese Bewertungsmethode ist allerdings ungenau und hängt von der bewertenden Bedienperson ab. Die Definition geeigneter objektiver Kriterien zur Zustandsbewertung der Pressstempel und gegebenenfalls zu ihrem Austausch ist schwierig. Manuelle Überprüfungsmethoden sind mit einem erheblichen Zeitaufwand verbunden. Ein unzureichender Zustand der Pressstempel, beispielsweise ihrer Stempel spitzen, macht sich in der Praxis häufig erst bemerkbar, wenn Produktionsprobleme oder eine unzureichende Qualität der hergestellten Presslinge auftreten. Eine Echtzeitüberwachung der Pressstempel, insbesondere der Stempel spitzen, ist auf diese Weise im Übrigen nicht möglich.

Aus US 10 598 605 B2 ist ein Verfahren zum Untersuchen von Pressstempeln bekannt, bei dem ein Pressstempel in eine Stempelhalterung eingelegt wird. Im in der Halterung gehaltenen Zustand wird der Pressstempel einerseits mittels eines LED-Mikrometers und andererseits mittels eines Lasersensors gescannt. Mit dem LED-Mikrometer und dem Laserscanner werden verschiedene Geometrieparameter des gescannten Pressstempels erfasst und mit Toleranzbereichen verglichen. Auf dieser Grundlage wird den Parametern ein Pass oder Fail Status zugeordnet. Das Abscannen jedes Punktes der zu untersuchenden Oberflächen des Pressstempels ist allerdings mit erheblichem Aufwand verbunden. Die in US 10 598 605 B2 verwendeten Sensoren sind außerdem kostenaufwendig.

Ausgehend von dem erläuterten Stand der Technik liegt der Erfindung daher die Aufgabe zugrunde, ein Verfahren und eine Vorrichtung der eingangsgenannten Art bereitzustellen, mit denen der Zustand eines Pressstempels in zuverlässiger, einfacher und kostengünstiger Weise bewertet werden kann.

Die Erfindung löst die Aufgabe durch die unabhängigen Ansprüche 1 und 20. Vorteilhafte Ausgestaltungen finden sich in den abhängigen Ansprüchen, der Beschreibung und den Figuren.

Für ein Verfahren der eingangsgenannten Art löst die Erfindung die Aufgabe durch die Schritte:
- mit einer Kamera wird ein Bild mindestens eines Abschnitts des Pressstempels aufgenommen,
- das aufgenommene Bild wird einer Auswerteeinrichtung zugeführt,
- die Auswerteeinrichtung führt mittels eines Bildverarbeitungsalgorithmus eine Zustandsanalyse mindestens eines Abschnitts des Presstempels durch und bewertet auf Grundlage der Zustandsanalyse den Zustand des Pressstempels,
- sofern der durch die Auswerteeinrichtung bewertete Zustand des Pressstempels außerhalb eines zulässigen Bereichs liegt, gibt die Auswerteeinrichtung eine Warnmeldung aus.

Die Erfindung löst die Aufgabe außerdem durch eine Vorrichtung zum Durchführen des erfindungsgemäßen Verfahrens, umfassend eine Kamera zum Aufnehmen eines Bildes mindestens eines Abschnitts eines Pressstempels sowie eine Auswerteeinrichtung, die dazu ausgebildet ist, mittels mindestens eines Bildverarbeitungsalgorithmus eine Zustandsanalyse des mindestens einen Abschnitts des Presstempels durchzuführen und auf Grundlage der Zustandsanalyse den Zustand des Pressstempels zu bewerten, und die weiter dazu ausgebildet ist, eine Warnmeldung auszugeben, sofern der durch die Auswerteeinrichtung bewertete Zustand des Pressstempels außerhalb eines zulässigen Bereichs liegt.

Der grundsätzliche Aufbau einer Rundläuferpresse, in der die erfindungsgemäß bewerteten Pressstempel eingesetzt werden, wurde eingangs erläutert. Demnach umfasst eine Rundläuferpresse in der Regel eine Vielzahl von oberen und unteren Pressstempeln, die jeweils das insbesondere pulverförmige Material in Kavitäten der Matrizenscheibe zu Presslingen, insbesondere Tabletten, verpressen. Die Pressstempel weisen mehrere Abschnitte auf, insbesondere einen Stempelschaft, an dessen einem Ende ein im Betrieb mit einer Druckeinrichtung der Rundläuferpresse, insbesondere den Druckrollen, zusammenwirkender Stempelkopf und an dessen anderem Ende eine im Betrieb das Material in der Kavität der Matrizenscheibe verpressende Stempelspitze angeordnet ist. Die Stempel spitzen sind abhängig von der Form und Größe der herzustellenden Presslinge ausgebildet. Für unterschiedliche Rundläuferpressen bzw. unterschiedliche herzustellende Presslinge kommen also unterschiedliche Pressstempel mit insbesondere unterschiedlich geformten und/oder dimensionierten Stempelspitzen zum Einsatz.

Die hinsichtlich eines Verschleißes besonders relevante Stirnfläche der Stempelspitze der Pressstempel kann in ihrem äußeren Bereich einen ringförmigen flachen Abschnitt aufweisen, der insbesondere in einer Ebene senkrecht zur Längsachse des Stempelschafts angeordnet ist. Der ringförmige flache Abschnitt umschließt eine den herzustellenden Pressling abbildende konkave Kontur. Der ringförmige flache Abschnitt soll die äußere Kante der Stirnfläche der Stempelspitze stärken und die den Pressling abbildende Kontur besonders in ihrem Randbereich vor Verschleiß oder Beschädigungen schützen, so dass jederzeit die gewünschte Presslingsgeometrie erzeugt wird. Die Breite des ringförmigen flachen Abschnitts liegt üblicherweise in einem Bereich von weniger als 1 mm, insbesondere weniger als 0,5 mm. Dieser schmale ringförmige flache Abschnitt ist im Betrieb der Rundläuferpresse besonderen Belastungen ausgesetzt und damit besonders anfällig für Verschleiß oder Beschädigungen.

Die Erfindung basiert zunächst auf dem Gedanken, mittels einer Kamera, insbesondere einer Digitalkamera, ein Bild bzw. Foto mindestens eines Abschnitts des Pressstempels, beispielsweise der Stirnfläche der Stempel spitze, des Stempelkopfes und/oder des Stempelschafts aufzunehmen. Die Aufnahme kann insbesondere in einer Draufsicht, also in Axialrichtung des Stempelschafts, auf die Stempelspitze und/oder auf den Stempelkopf erfolgen. Die Kamera kann im sichtbaren Wellenlängenbereich arbeiten oder zum Beispiel im Infrarotbereich. Sie kann zum Beispiel einen zweidimensionalen CMOS- oder CCD-Sensor umfassen. Das aufgenommene Digitalbild wird an eine Auswerteeinrichtung gegeben. Die Auswerteeinrichtung führt eine Zustandsanalyse des aufgenommenen Abschnitts, und damit des Presstempels durch. Dazu verarbeitet die Auswerteeinrichtung das aufgenommene Bild mit einem Bildverarbeitungsalgorithmus bzw. wendet einen Bildverarbeitungsalgorithmus auf das aufgenommene Bild an. Eine entsprechende Software kann in der Auswerteeinrichtung hinterlegt sein. Zum Beispiel durch eine Bedienperson oder auch durch die Auswerteeinrichtung kann ein zulässiger Bereich für bestimmte im Rahmen der Zustandsanalyse bewertete Parameter definiert werden. Sofern dieser zulässige Bereich verlassen wird, wird durch die Auswerteeinrichtung ein Warnsignal ausgegeben, zum Beispiel in Form eines optischen und/oder akustischen Signals und/oder in Form einer Benachrichtigung einer Bedienperson, zum Beispiel auf einem Display oder per App auf einem PC, Notebook, Tablet oder Smartphone. Der durch die Auswerteeinrichtung bewertete Zustand kann insbesondere ein Verschleißzustand des mindestens einen Abschnitts bzw. des Pressstempels sein. Wie erläutert, kommt es im Betrieb einer Rundläuferpresse zu einem Verschleiß der Stempel spitze, zum Beispiel durch abrasives zu verpressendes Material. Auch Beschädigungen der Oberfläche der Stempelspitze, insbesondere der Stirnfläche, wie Kratzer, Beulen oder andere Verformungen können im Rahmen der erfindungsgemäßen Zustandsanalyse erfasst und bewertet werden. Entsprechendes gilt für den Stempelkopf oder den Stempelschaft. Dabei ist auch eine Echtzeitbewertung der Pressstempel denkbar. Weiterhin ist eine automatische Bewertung der Pressstempel durch die Auswerteeinrichtung in Verbindung mit der Kamera realisierbar. Die Zustandsbewertung erfolgt insbesondere unabhängig von einer individuellen Begutachtung durch eine Bedienperson. Gleichzeitig sind das erfindungsgemäße Verfahren bzw. die erfindungsgemäße Vorrichtung kostengünstiger realisierbar als die im Stand der Technik vorgeschlagene Verwendung eines Laserscanners. Durch die Verwendung von Bildverarbeitungsalgorithmen ist eine zuverlässige Bewertung des Zustands der Pressstempel sichergestellt. Erfindungsgemäß werden somit in einfacher und zuverlässiger Weise Qualitätsmerkmale der hergestellten Presslinge nachhaltig optimiert, die Prozessstabilität verbessert und ungeplante Ausfälle des Betriebs der Rundläuferpresse minimiert.

Es können sämtliche obere und/oder untere Pressstempel der Rundläuferpresse in der erfindungsgemäßen Weise bewertet werden. Die Auswerteeinrichtung kann die Ergebnisse der Zustandsanalyse für eine Bedienperson anzeigen. Die Auswerteeinrichtung kann auch eine Eingabeeinrichtung umfassen, über die eine Bedienperson Parameter für die Zustandsanalyse vorgeben kann, zum Beispiel zulässige Bereich für bestimmte bewertete Parameter oder den zu bewertenden Stempeltyp. Das Anzeigen der Ergebnisse der Zustandsanalyse bzw. die Eingabe durch eine Bedienperson können auf einem Display bzw. einer Eingabeeinrichtung der Auswerteeinrichtung, der Rundläuferpresse oder eines getrennten Geräts, zum Beispiel eines PCs, Notebooks, Tablets oder Smartphones, erfolgen. Die Anzeige und die Eingabe können insbesondere über eine entsprechende Applikation (App) erfolgen.

Nach einer Ausgestaltung kann die Zustandsanalyse mittels eines Bildverarbeitungsalgorithmus einen Vergleich des aufgenommenen Bildes mit mindestens einem Referenzbild umfassen. Das mindestens eine Referenzbild kann einen Sollzustand des mindestens einen Abschnitts, zum Beispiel der Stempelspitze bzw. ihrer Stirnfläche, zeigen. Mithilfe des Bildverarbeitungsalgorithmus kann ein Vergleich des aufgenommenen Bildes mit einem oder mehreren Referenzbildern erfolgen. Dabei können bestimmte Parameter verglichen werden, zum Beispiel ein äußerer Durchmesser der Stirnfläche der Stempelspitze, sofern vorhanden ein innerer Durchmesser eines ringförmigen äußeren abgeflachten Bereichs der Stirnfläche oder eine Ebenheit der Stirnfläche, insbesondere das Auftreten von unregelmäßigen Bereichen in dem aufgenommenen Bild im Vergleich zu dem mindestens einen Referenzbild. Entsprechendes gilt zum Beispiel für den Stempelkopf. Es kann eine Datenbank der Referenzbilder für den jeweiligen Stempeltyp, beispielsweise die jeweilige Stempelspitzenform und/oder -größe angelegt werden, so dass aufgenommene Bilder mit in der Datenbank hinterlegten Referenzbildern verglichen werden können. Durch einen direkten Vergleich der aufgenommenen Bilder mit Referenzbildern können zum Beispiel Kantenabbrüche im Bereich der Stempelspitze schnell und sicher erkannt werden.

Nach einer weiteren Ausgestaltung kann vorgesehen sein, dass das mindestens eine Referenzbild mindestens ein Referenzbild des mindestens einen Abschnitts eines unbenutzten Pressstempels ist und/oder dass das mindestens eine Referenzbild mindestens ein Referenzbild des mindestens einen Abschnitts des zu bewertenden Pressstempels vor dem letzten Produktionsprozess des zu bewertenden Pressstempels in der Rundläuferpresse ist. Es kann also ein Vergleich mit einem Neuzustand der Pressstempel oder ein Vergleich mit einem vorherigen Zustand der Pressstempel erfolgen, insbesondere einem Zustand direkt vor dem letzten mit dem Pressstempel in der Rundläuferpresse durchgeführten Produktionsprozess oder einem Zustand vor mehreren der zuletzt mit dem Pressstempel in der Rundläuferpresse durchgeführten Produktionsprozesse.

Allgemein kann das aufgenommene Bild mit Referenzbildern genau des zu bewertenden Pressstempels verglichen werden. So können auch individuelle Eigenschaften des jeweiligen Pressstempels bewertet bzw. berücksichtigt werden. Es ist aber auch denkbar, dass die Referenzbilder Standardbilder des zu bewertenden Stempeltyps sind.

Das aufgenommene Bild und das mindestens eine Referenzbild können durch die Auswerteeinrichtung vor dem Vergleich mittels mindestens eines Bildverarbeitungsalgorithmus bearbeitet werden. Dabei können verschiedene Bearbeitungsmethoden zum Einsatz kommen, die eine Weiterverarbeitung vereinfachen, zum Beispiel eine Glättung, Graustufenumwandlung etc.

Nach einer weiteren Ausgestaltung kann die Zustandsanalyse mittels eines Bildverarbeitungsalgorithmus das Extrahieren eines Bereichs von Interesse aus dem aufgenommenen Bild umfassen, wobei der Bereich von Interesse vorzugsweise die Stirnfläche der Stempelspitze ist. Indem aus dem aufgenommenen Bild eine sogenannte Region of Interest (ROI) extrahiert wird, kann zum Beispiel der Randbereich der Stempelspitze besonders zuverlässig analysiert werden. Es erfolgt eine Begrenzung des auszuwertenden Bildes auf die Stirnfläche der Stempelspitze. Dahinter sichtbare Bereiche des Pressstempels, insbesondere des Stempelschafts und gegebenenfalls des Stempelkopfes werden nicht betrachtet. Dies vereinfacht und beschleunigt die Auswertung.

Das aufgenommene Bild kann ein Farbbild (RGB) sein. Die Zustandsanalyse mittels eines Bildverarbeitungsalgorithmus kann dann nach einer weiteren Ausgestaltung eine Grauskalierung des Farbbilds umfassen. Weiterhin kann die Zustandsanalyse mittels eines Bildverarbeitungsalgorithmus die Umwandlung des aufgenommenen Bildes in ein Binärbild umfassen. Die Binarisierung kann mit einem adaptiven Schwellenwert erfolgen. Die Graustufenumwandlung und die Binarisierung erleichtern das Auffinden für den Verschleißzustand relevanter optischer Merkmale in dem aufgenommenen Bild. Dabei ist es auch möglich, dass das Binärbild noch Fließkommastellen zwischen 0 und 1 umfasst.

Wie bereits erwähnt, kann der von der Kamera aufgenommene mindestens eine Abschnitt des Pressstempels die Stirnfläche der Stempelspitze des Pressstempels sein. Die Zustandsanalyse mittels eines Bildverarbeitungsalgorithmus kann dann nach einer weiteren Ausgestaltung die Ermittlung eines Mittelpunktes der aufgenommenen Stirnfläche der Stempelspitze umfassen. Sofern in diesem Zusammenhang von einem Mittelpunkt gesprochen wird, handelt es sich insbesondere um den geometrischen Mittelpunkt bzw. geometrischen Schwerpunkt, da die Stirnfläche nicht notwendigerweise kreisrund ist. Weiterhin kann die Zustandsanalyse mittels eines Bildverarbeitungsalgorithmus die Transformation der Koordinaten des aufgenommenen Bildes in ein Polarkoordinatensystem umfassen. Um insbesondere einen flachen ringförmigen Bereich an der Außenseite der Stempelspitze zu bewerten, kann es sinnvoll sein, das aufgenommene Bild in Polarkoordinaten zu transformieren, und hierfür zunächst den Mittelpunkt der Stirnfläche der Stempelspitze zu bestimmen.

Entsprechend kann nach einer weiteren Ausgestaltung, bei der die Stirnfläche der Stempelspitze wie eingangs erläutert in ihrem äußeren Bereich einen ringförmigen flachen Abschnitt aufweist, die Zustandsanalyse mittels eines Bildverarbeitungsalgorithmus das Identifizieren einer äußeren und inneren Grenze des ringförmigen flachen Abschnitts umfassen. Die den ringförmigen flachen Abschnitt begrenzenden, in dem aufgenommenen Bild zum Beispiel kreisförmigen Linien erscheinen nach der Transformation in Polarkoordinaten im Idealfall als parallel verlaufende Linien. Dies vereinfacht die Auswertung hinsichtlich der Grenzen des ringförmigen flachen Abschnitts mittels eines Bildverarbeitungsalgorithmus erheblich. Entsprechend kann die Zustandsanalyse mittels eines Bildverarbeitungsalgorithmus das Ermitteln eines Abstands zwischen der äußeren und inneren Grenze über den Umfang des ringförmigen flachen Abschnitts umfassen. Dieser Abstand kann über den Umfang insbesondere nach der Transformation in Polarkoordinaten auswertungstechnisch sehr einfach durch Ermitteln der Pixel auf dem verarbeiteten aufgenommenen Bild entlang einer Achse quer zu den die Grenzen darstellenden parallelen Linien bestimmt werden. Die in dem derart verarbeiteten aufgenommenen Bild auftretenden Hauptmaxima stellen den inneren und den äußeren Rand des ringförmigen flachen Abschnitts der Stirnfläche der Stempelspitze dar. Entsprechend können die äußere und innere Grenze des ringförmigen flachen Abschnitts durch Ermitteln von Maxima in dem im Rahmen der Zustandsanalyse verarbeiteten Bild identifiziert werden. Die Auswertung des Abstands kann in einfacher Weise aus der Differenz der auftretenden Hauptmaxima vor oder nach einer Rücktransformation von Polarkoordinaten in kartesische Koordinaten erfolgen. Es ist aber natürlich auch möglich, die äußere und innere Grenze des ringförmigen flachen Abschnitts in kartesischen Koordinaten ohne Mittelpunktbestimmung und Transformation in Polarkoordinaten zu bestimmen, insbesondere durch Bestimmen der die Grenzen abbildenden Pixel beispielsweise auf einem Array-Sensor. Die ermittelten Abstandswerte zwischen der äußeren und inneren Grenze des ringförmigen flachen Abschnitts über den Umfang der Stirnfläche der Stempelspitze können zum Beispiel mit Sollwerten für den Abstand verglichen werden. Weichen einzelne oder mehrere über den Umfang ermittelte Abstandswerte unzulässig von den Sollwerten ab, kann durch die Auswerteeinrichtung auf einen erhöhten Verschleiß oder eine Beschädigung des ringförmigen flachen Abschnitts bzw. seiner äußeren Ränder geschlossen werden. Auch denkbar ist es, eine Schwankungsbreite der durch den Umfang ermittelten Abstandswerte zu ermitteln, zum Beispiel einen minimalen und einen maximalen Abstandswert. Sofern die Schwankungsbreite einen zulässigen Bereich überschreitet, kann auf einen erhöhten Verschleiß oder eine Beschädigung des flachen ringförmigen Abschnitts und damit der Stempelspitze geschlossen werden.

Sofern in diesem Zusammenhang von einem ringförmigen Abschnitt gesprochen wird, umfasst dies nicht nur kreisringförmige Abschnitte, sondern auch andere ringförmige Geometrien, wie zum Beispiel ovale oder oblongförmige ringförmige Abschnitte, oder auch unrunde Ringformen, beispielsweise eckige bzw. polygonförmige ringförmige Abschnitte.

Nach einer weiteren Ausgestaltung kann die Zustandsanalyse mittels eines Bildverarbeitungsalgorithmus das Anwenden eines Canny-Algorithmus auf das aufgenommene Bild umfassen. Mittels eines Canny-Algorithmus können für die Bewertung des Zustands nicht relevante Bildinformationen effektiv aus dem aufgenommenen Bild herausgefiltert werden, beispielsweise Lichtreflexe von zur Beleuchtung des mindestens einen Abschnitts vorgesehenen Lichtquellen oder ähnlichem. Dies vereinfacht die weitergehende Zustandsanalyse.

Zum Beispiel auf Grundlage einer Verwendung eines Canny-Algorithmus kann die Zustandsanalyse mittels eines Bildverarbeitungsalgorithmus das Detektieren von Anomalien auf dem mindestens einen Abschnitt des Pressstempels, beispielsweise auf der Stirnfläche der Stempel spitze, umfassen. Anomalien sind Abweichungen von einem erwarteten Zustand, zum Beispiel Oberflächendefekte, so dass die Oberfläche partiell von einer erwarteten zum Beispiel ebenen oder konkaven Form abweicht. Typischerweise auftretende Anomalien können Kratzer, Risse, Einkerbungen etc. sein. Auch kann zum Detektieren von Anomalien ein Bildverarbeitungsalgorithmus zur Clusteranalyse verwendet werden. Damit werden Anomalien insbesondere dann als kritisch bewertet, wenn sie gehäuft an einem Ort oder in einem Bereich auftreten. Es kann zum Beispiel neben der Randbreite eines ringförmigen flachen Abschnitts der Stempelspitze somit insbesondere auch die Stempelspitzenfläche insgesamt, insbesondere die Fläche der üblicherweise konkaven Ausnehmung zur Abbildung des herzustellenden Presslings mittels Bildverarbeitungsalgorithmen untersucht werden. Hierzu können zum Beispiel nach dem Extrahieren einer Region von Interesse und gegebenenfalls einer Grauskalierung und weiterhin beispielsweise einer Glättung des aufgenommenen Bildes auf dem so verarbeiteten Bild Anomalien detektiert werden. Zum Beispiel wäre es möglich, nach einem Glätten des Bildes Anomalien, die beispielsweise durch Kratzer, Risse oder Einkerbungen in der Stempelspitze entstanden sind, mithilfe eines DBSCAN-Algorithmus (Density-Based Spatial Clustering of Applications with Noise) auszuwerten. Auf diese Weise können besonders schwerwiegende Defekte in der Stempel spitze, die zu einem entsprechenden Defekt des hergestellten Presslings führen, zuverlässig frühzeitig erkannt werden, so dass die betroffenen Pressstempel identifiziert und zum Beispiel ausgetauscht werden können.

Nach einer weiteren Ausgestaltung kann die Zustandsanalyse mittels Algorithmen des maschinellen Lernens durchgeführt werden. Insbesondere kann ein selbstlernender Algorithmus zur Anwendung kommen, der die Kriterien für die Bewertung des Zustands der Pressstempel, insbesondere der Stempel spitze, auf Grundlage von Trainingsdaten und/oder Erfahrungsdaten aus vorangegangenen Bewertungsvorgängen fortlaufend optimiert. Auch Grenzwerte für eine Abweichung von im Rahmen der erfindungsgemäßen Bildverarbeitung ermittelter Parameter von Sollparametern können durch eine solche selbstlernende Software auf Grundlage von Trainingsdaten oder Erfahrungswerten während des Betriebs optimiert werden. Die Algorithmen des maschinellen Lernens können zum Beispiel neuronale Netze umfassen.

Nach einer weiteren Ausgestaltung kann vorgesehen sein, dass der zu bewertende Pressstempel während der Durchführung des Verfahrens in der Rundläuferpresse montiert ist oder dass der zu bewertende Pressstempel während der Durchführung des Verfahrens in einer Halterung außerhalb der Rundläuferpresse gehalten ist, insbesondere in einer Wascheinrichtung für die Pressstempel der Rundläuferpresse. Die Kamera kann weiterhin an einem in einen Pressraum der Rundläuferpresse oder in eine Wascheinrichtung für die Pressstempel bewegbaren Haltearm gehalten werden. Der Rotor kann zur Bewertung der Pressstempel der Rundläuferpresse zum Beispiel sukzessive derart gedreht werden, dass die mindestens einen Abschnitte, beispielsweise die Stirnflächen der Stempel spitzen, der Pressstempel der Rundläuferpresse nacheinander von der Kamera aufgenommen werden. Auf diese Weise ist eine Bewertung sämtlicher Pressstempel möglich. Der Haltearm kann dazu gedreht werden, zum Beispiel um 360°, so dass nacheinander die oberen und die unteren Pressstempel der Rundläuferpresse aufgenommen werden können. Mit den vorgenannten Ausgestaltungen ist eine weitgehend automatische Zustandsanalyse sämtlicher Pressstempel möglich, und zwar im in der Rundläuferpresse verbauten Zustand oder in einem aus der Rundläuferpresse ausgebauten Zustand. Auch denkbar ist eine Integration der erfindungsgemäß eingesetzten Kamera in ein zusätzlich vorgesehenes taktiles Messsystem zum Erfassen von Geometrieparametern der Pressstempel. Zum Beispiel der Haltearm kann Teil eines Roboters sein, so dass eine automatische Steuerung des Haltearms für die Durchführung der Zustandsanalyse erfolgen kann. Dies kann ebenso durch die Auswerteeinrichtung gesteuert werden.

Das Verfahren kann auch in einer eigenständigen Messvorrichtung ausgeführt werden, indem Stempel einzeln oder in einem Stempelsatz in eine dafür vorgesehene Halteaufnahme der Messvorrichtung eingebracht werden. Die Halteaufnahme ist so positioniert, dass Bildaufnahmen mit der Kamera möglich sind. Sie befindet sich beispielsweise in einem Lichtzelt. Wenn ein Stempelsatz vermessen werden soll, wird jeder Stempel beispielsweise in einer Halteaufnahme mit Steckverbindungen für die jeweiligen Stempel gehalten. Dieser Aufbau ermöglicht es, Bilder von einzelnen Stempeln aufzunehmen ohne diese aus der Halteaufnahme zu entnehmen. Die Halteaufnahme wird hierzu fest positioniert, beispielsweise in dem genannten Lichtzelt mit Hilfe einer Halterung oder Ähnlichem, während die Kamera für Bildaufnahmen zu jedem einzelnen Stempel gefahren wird.

Die Integration des erfindungsgemäßen Verfahrens in eine Wascheinrichtung für Pressstempel der Rundläuferpresse kann weitere Vorteile bringen. Einerseits sind die Pressstempel in der Wascheinrichtung regelmäßig in einer Halterung aufgenommen und somit in ihrer Position fixiert (GMP Umfeld), was die Aufnahme der Bilder der Stirnfläche der Stempelspitze erleichtert. Darüber hinaus werden durch das Aufnehmen der Bilder in einer Wascheinrichtung Probleme vermieden, die in einem Pressraum einer Rundläuferpresse zum Beispiel aufgrund von vorhandenem Produktstaub entstehen können. Indem die gewaschenen Stempel vor der erfindungsgemäßen Zustandsbewertung gegebenenfalls noch poliert werden, können weitere die Zustandsbewertung möglicherweise verfälschende Parameter sicher ausgeschlossen werden. Zum Beispiel bei der Integration in eine Wascheinrichtung kann vor und/oder nach dem jeweiligen Waschvorgang eine Kameraaufnahme des mindestens einen Abschnitts gemacht werden. Bei einer Integration des erfindungsgemäßen Verfahrens in die Rundläuferpresse kann zum Beispiel vor jedem anlaufenden Produktionsprozess eine Kameraaufnahme der Pressstempel und entsprechende Zustandsbewertung erfolgen.

Die Erfindung betrifft auch eine Wascheinrichtung für Pressstempel einer Rundläuferpresse mit einer Halterung zum Halten der oberen und/oder unteren Pressstempel in einer Waschkabine, weiter umfassend eine Waschvorrichtung zum Waschen der oberen und/oder unteren Pressstempel, und umfassend eine erfindungsgemäße Vorrichtung. Die Wascheinrichtung kann auch eine Poliervorrichtung zum Polieren der Pressstempel umfassen.

Die Erfindung betrifft auch eine Rundläuferpresse, umfassend einen mittels eines Drehantriebs drehbaren Rotor, wobei der Rotor eine obere Stempelführung für obere Pressstempel und eine untere Stempelführung für unsere Pressstempel sowie eine zwischen den Stempelführungen angeordnete Matrizenscheibe aufweist, wobei die Pressstempel mit Kavitäten der Matrizenscheibe zusammenwirken, wobei die Rundläuferpresse weiter eine Fülleinrichtung umfasst, durch die zu verpressendes Pulvermaterial in die Kavitäten der Matrizenscheibe gefüllt wird, und wobei die Rundläuferpresse eine Druckeinrichtung mit einer oberen Druckrolle und einer unteren Druckrolle umfasst, die im Betrieb mit den oberen Pressstempeln und mit den unteren Pressstempeln zu verpressendes Pulvermaterial in den Kavitäten der Matrizenscheibe zusammenwirken, und umfassend eine erfindungsgemäße Vorrichtung.

Es ist auch möglich, mit dem erfindungsgemäßen Verfahren und der erfindungsgemäßen Vorrichtung zusätzlich an einem Pressstempel angeordnete Komponenten, beispielsweise Faltenbälge oder Staubschutzkappen, mit der Kamera aufzunehmen und die aufgenommenen Bilder in der erfindungsgemäßen Weise auszuwerten. Auf diese Weise kann auch der Zustand solcher weiterer Komponenten in der erfindungsgemäßen Weise bewertet werden.

Ausführungsbeispiele der Erfindung werden nachfolgend anhand von Figuren näher erläutert. Es zeigen schematisch:
- Figur 1: einen Pressstempel einer Rundläuferpresse in einer Seitenansicht,
- Figur 2: eine vergrößerte Ansicht der Stempelspitze des in Figur 1 gezeigten Pressstempels,
- Figur 3: eine Draufsicht auf die in Figur 2 gezeigte Stempelspitze,
- Figur 4: eine erfindungsgemäße Vorrichtung zum Bewerten des Zustands des in den Figuren 1 bis 3 gezeigten Pressstempels,
- Figur 5: Diagramme zur Veranschaulichung der erfindungsgemäßen Zustandsanalyse mittels eines Bildverarbeitungsalgorithmus,
- Figur 6: weitere Diagramme zur Veranschaulichung der erfindungsgemäßen Zustandsanalyse mittels eines Bildverarbeitungsalgorithmus,
- Figur 7: weitere Diagramme zur Veranschaulichung der erfindungsgemäßen Zustandsanalyse mittels eines Bildverarbeitungsalgorithmus,
- Figur 8: weitere Diagramme zur Veranschaulichung der erfindungsgemäßen Zustandsanalyse mittels eines Bildverarbeitungsalgorithmus,
- Figur 9: weitere Diagramme zur Veranschaulichung der erfindungsgemäßen Zustandsanalyse mittels eines Bildverarbeitungsalgorithmus, und
- Figur 10: weitere Diagramme zur Veranschaulichung der erfindungsgemäßen Zustandsanalyse mittels eines Bildverarbeitungsalgorithmus.

Soweit nichts anderes angegeben ist, bezeichnen in den Figuren gleiche Bezugszeichen gleiche Gegenstände.

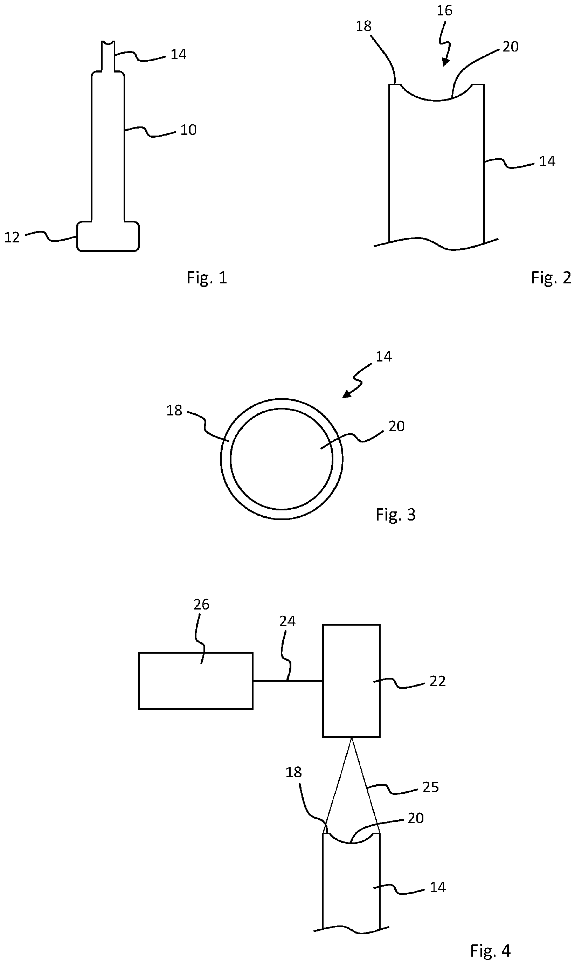

In Figur 1 ist sehr schematisch ein Pressstempel einer Rundläuferpresse dargestellt. Der Pressstempel umfasst einen beispielsweise im Wesentlichen zylindrischen Stempelschaft 10, an dessen einem Ende ein im Betrieb mit einer Druckeinrichtung, insbesondere Druckrollen, der Rundläuferpresse zusammenwirkender Stempelkopf 12 angeordnet ist. An dem gegenüberliegenden Ende des Stempelschafts 10 ist eine Stempelspitze 14 angeordnet, die im Betrieb in eine Kavität einer Matrizenscheibe der Rundläuferpresse eintaucht und im Zusammenspiel mit der Stempelspitze eines gegenüberliegenden Pressstempels in die Kavität gefülltes Pulvermaterial zu einem Pressling, insbesondere einer Tablette, verpresst. In Figur 2 ist die Stempelspitze 14 in einer ausschnittsweise vergrößerten Darstellung gezeigt. Dabei ist zu erkennen, dass die Stempelspitze 14 im äußeren Bereich ihrer Stirnfläche 16 (Pressfläche) einen ringförmigen flachen Abschnitt 18 (Randbreite) aufweist, der in einer Ebene senkrecht zur in Figur 2 vertikal verlaufenden Längsachse des Stempelschafts 10 liegt. In Figur 3 ist die Stempelspitze 14 in einer Draufsicht, in Figur 2 von oben, gezeigt. Der ringförmige flache Abschnitt 18 kann zum Beispiel eine kreisrunde oder ovale Form besitzen. Er begrenzt einen mittig liegenden konkaven Abschnitt 20 (Pressfläche ohne Randbreite), der im Betrieb der Rundläuferpresse die äußere Form des hergestellten Presslings abbildet. Der dem in den Figuren 1 bis 3 gezeigten Pressstempel paarweise gegenüberliegend zugeordnete weitere Pressstempel kann identisch ausgebildet sein, so dass im Betrieb die ringförmigen flachen Abschnitte 18 der einander gegenüberliegenden Pressstempel beim Verpressen des Pulvermaterials in Anlage geraten.

Im Betrieb kann es zum Beispiel aufgrund von abrasivem Pulvermaterial oder aus anderen Gründen zu Verschleiß oder Beschädigungen zum Beispiel der Stirnfläche 16 der Stempelspitze 14 kommen, insbesondere des schmalen und insofern relativ empfindlichen ringförmigen flachen Abschnitts 18.

In Figur 4 ist eine erfindungsgemäße Vorrichtung zum Bewerten des Zustands des Pressstempels, insbesondere der Stempelspitze 14 gezeigt, wobei aus Veranschaulichungsgründen wiederum lediglich die Stempelspitze 14 ausschnittsweise vergrößert dargestellt ist. Die Vorrichtung umfasst eine Kamera 22, insbesondere eine Digitalkamera 22, umfassend zum Beispiel einen zweidimensionalen CMOS- oder CCD-Arraysensor, mit der ein Bild der Stirnfläche 16 der Stempelspitze 14 in einer Draufsicht aufgenommen wird, wie in Figur 4 durch das schematisch eingezeichnete Sichtfeld 23 veranschaulicht. Das aufgenommene Bild wird über eine drahtgebundene oder drahtlose Verbindung 24 einer Auswerteeinrichtung 26 zugeführt. Die Auswerteeinrichtung 26 führt mittels mindestens eines Bildverarbeitungsalgorithmus eine Zustandsanalyse der Stempelspitze 14 des Pressstempels durch und bewertet auf Grundlage der Zustandsanalyse den Zustand des Pressstempels. Dazu wird mindestens ein Bildverarbeitungsalgorithmus auf das von der Kamera 22 aufgenommene Bild angewendet. Dazu ist in der Auswerteeinrichtung 26 eine entsprechende Software hinterlegt. Die Auswerteeinrichtung 26 kann außerdem eine Anzeige- und/oder Bedieneinrichtung umfassen zur Anzeige von zum Beispiel Warnmeldungen, sofern der durch die Auswerteeinrichtung 26 bewertete Zustand des Pressstempels außerhalb eines zulässigen Bereichs liegt, und/oder zur Eingabe von Auswerteparametern durch eine Bedienperson. Es ist auch möglich, dass die Auswerteeinrichtung 26 mit einem externen Gerät kommuniziert, zum Beispiel einem PC, einem Notebook, einem Tablet oder einem Smartphone, auf dem zum Beispiel eine App zur Anzeige und Eingabe von Daten der Auswerteeinrichtung 26 hinterlegt sein kann.

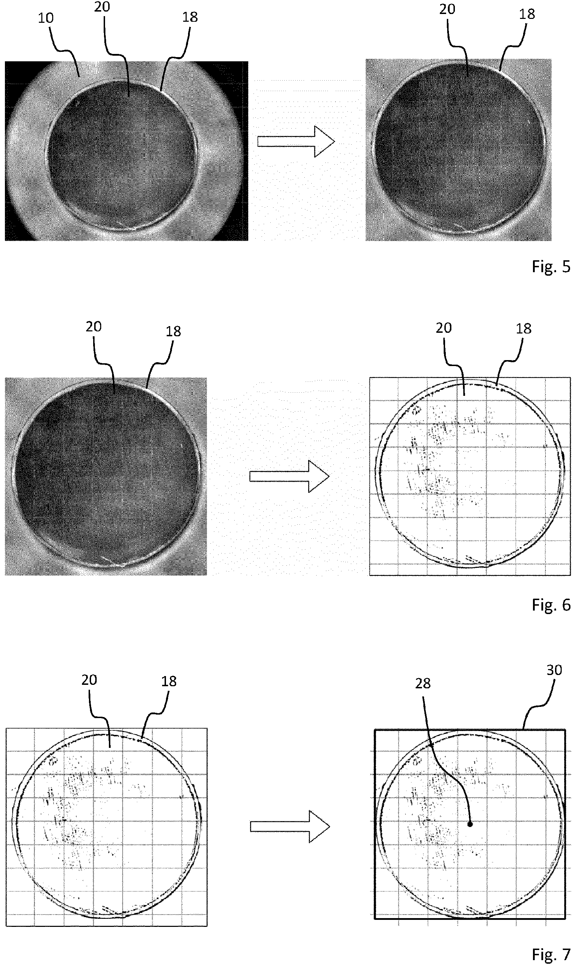

Die Auswertung des durch die Kamera 22 aufgenommenen Bildes mittels mindestens eines Bildverarbeitungsalgorithmus soll anhand der Figuren 5 bis 10 näher erläutert werden. In Figur 5 links dargestellt ist beispielhaft ein durch die Kamera 22 aufgenommenes Bild der Stirnfläche 16 der Stempelspitze 14. Neben der Stirnfläche 16 mit ihrem ringförmigen flachen Abschnitt 18 und dem konkaven Abschnitt 20 ist außerhalb des Fokus der Kamera 22 der Stempelschaft 10 zu erkennen. In einem ersten Auswerteschritt extrahiert die Auswerteeinrichtung 26 mittels eines Bildverarbeitungsalgorithmus aus dem in Figur 5 linken Bild als Bereich von Interesse die Stirnfläche 16 der Stempelspitze 14, wie in Figur 5 rechts dargestellt.

In Figur 6 ist links das bearbeitete Bild aus Figur 5, rechte Seite, dargestellt. In einem weiteren Auswerteschritt führt die Auswerteeinrichtung 26 mittels eines Bildverarbeitungsalgorithmus eine Grauskalierung und Umwandlung des in Figur 6 linken Bildes in ein Binärbild um, welches in Figur 6 rechts dargestellt ist.

Dieses in Figur 7 wiederum links dargestellte Binärbild wird von der Auswerteeinrichtung 26 mittels eines Bildverarbeitungsalgorithmus so weiterverarbeitet, dass der Mittelpunkt 28 des ringförmigen flachen Abschnitts 18, und damit der Stirnfläche 16 der Stempelspitze 14 und ein den ringförmigen flachen Abschnitt 18 begrenzendes Viereck 30 bestimmt werden.

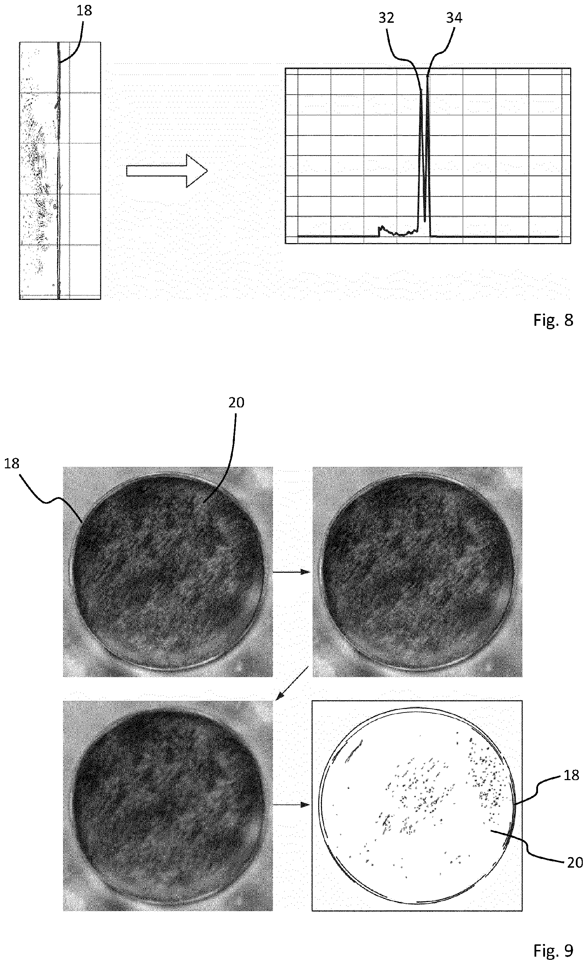

Durch die Auswerteeinrichtung 26 wird anschließend mittels eines Bildverarbeitungsalgorithmus das in Figur 7 rechts gezeigte verarbeitete Bild in Polarkoordinaten transformiert, wie in Figur 8 auf der linken Seite dargestellt. Die in Figur 7 im Wesentlichen kreisförmigen inneren und äußeren Grenzen des ringförmigen flachen Abschnitts 18 erscheinen nunmehr als im Idealfall parallele Geraden. Wie in Figur 8 rechts dargestellt, ergeben sich in x-Richtung, in Figur 8 also von links nach rechts, zwei Intensitätsmaxima 32, 34, deren Abstand dem Abstand der inneren und äußeren Grenze, und damit der Breite des ringförmigen flachen Abschnitts 18 entspricht. Indem die Auswerteeinrichtung 26 mittels eines Bildverarbeitungsalgorithmus die in Figur 8 rechts dargestellten Maxima 32, 34 über die Y-Achse, in Figur 8 also von unten nach oben, nacheinander ermittelt, kann der Abstand zwischen der inneren und äußeren Grenze des ringförmigen flachen Abschnitts 18 über den gesamten Umfang des ringförmigen flachen Abschnitts 18 ermittelt werden.

Mit der Zustandsanalyse mittels Bildverarbeitungsalgorithmus, wie anhand der Figuren 5 bis 8 erläutert, kann zuverlässig und einfach der Zustand des ringförmigen flachen Abschnitts 18 und insbesondere ein etwaiger Kantendefekt dieses Abschnitts 18 bestimmt werden. So können die ermittelten Parameter, wie zum Beispiel der Abstand zwischen der inneren und äußeren Grenze des ringförmigen flachen Abschnitts 18 mit Toleranzgrenzen verglichen und bei Verlassen eines zulässigen Bereichs in der erläuterten Weise ein Warnsignal ausgegeben werden.

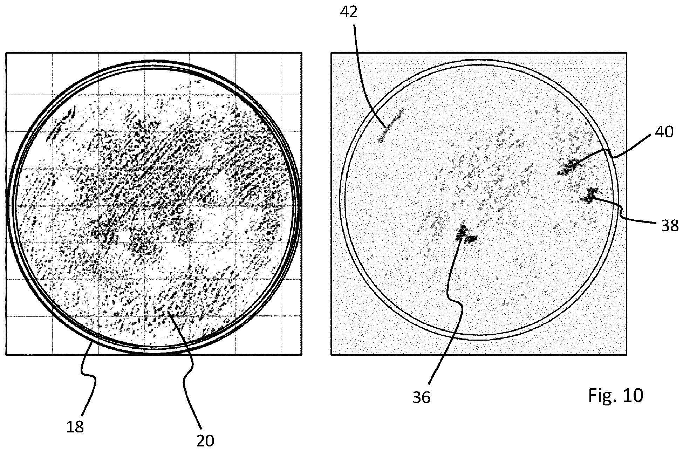

Anhand der Figuren 9 und 10 soll eine zusätzlich oder alternativ mögliche Zustandsanalyse mittels mindestens eines Bildverarbeitungsalgorithmus durch die Auswerteeinrichtung 26 erläutert werden, mit der auch der Oberflächenzustand der Stirnfläche 16 der Stempelspitze 14 bewertet werden kann.

In Figur 9 sind vier Ansichten dargestellt, wobei links oben wiederum das auf den Bereich von Interesse reduzierte, von der Kamera 22 aufgenommene Bild dargestellt ist, wie es auch in Figur 5, rechte Seite, gezeigt ist. Dieses Bild wird durch die Auswerteeinrichtung 26 mittels eines Bildverarbeitungsalgorithmus in ein grauskaliertes Bild umgewandelt, wie in Figur 9 oben rechts gezeigt. Weiterhin kann die Auswerteeinrichtung 26 mittels eines Bildverarbeitungsalgorithmus eine Glättung des grauskalierten Bildes durchführen, wie in Figur 9 unten links gezeigt. Anschließend kann durch die Auswerteeinrichtung 26 beispielsweise ein Canny Edge Bildverarbeitungsalgorithmus auf das verarbeitete Bild angewendet werden. Das Ergebnis ist in Figur 9 unten rechts dargestellt. Erkennbar sind Anomalien auf der Oberfläche der Stirnfläche 16 der Stempelspitze 14 zu erkennen, die zum Beispiel durch Kratzer oder ähnliche Oberflächendefekte verursacht sein können. Die Auswerteeinrichtung 26 kann entsprechend diese Anomalien auf der Stirnfläche 16 der Stempelspitze 14 detektieren und eine Warnmeldung über einen erhöhten Verschleiß der Stempelspitze 14 ausgeben.

In Figur 10 oben links ist wiederum ein durch die Auswerteeinrichtung 26 mittels eines Bildverarbeitungsalgorithmus zum Beispiel aus dem in Figur 9 oben rechts gezeigten grauskalierten Bild erzeugtes Binärbild dargestellt. In diesem Binärbild kann durch die Auswerteeinrichtung 26 mittels eines Bildverarbeitungsalgorithmus wiederum die innere und äußere Grenze des ringförmigen flachen Abschnitts 18 ermittelt werden. Außerdem kann durch die Auswerteeinrichtung 26 ein Bildverarbeitungsalgorithmus zur Clusteranalyse angewendet werden, um Anomalien auf der Oberfläche der Stirnfläche 16 der Stempel spitze 14 zu detektieren, wie in Figur 10 rechts dargestellt. Zum Einsatz kommen kann zum Beispiel ein DBSCAN-Algorithmus (Density-Based Spatial Clustering of Applications with Noise). Die Auswerteeinrichtung 26 kann dabei eine Häufung von detektierten Anomalien, also ein Cluster, detektieren, wie in Figur 10 beispielhaft für vier Cluster 36, 38, 40, 42 dargestellt. Diese Cluster 36, 38, 40, 42 können durch die Auswerteeinrichtung 26 entsprechend als Defekte der Oberfläche bewertet werden, so dass diese wiederum eine Warnmeldung ausgeben kann.

Die Zustandsanalyse kann durch die Auswerteeinrichtung 26 unter Verwendung von Algorithmen des maschinellen Lernens durchgeführt werden. Dazu können Trainingsdaten in Form von Bildern von innerhalb eines zulässigen Bereichs liegenden Stirnflächen 16 von Stempelspitzen 14 sowie in Form von Bildern von außerhalb des zulässigen Bereichs liegenden Stirnflächen 16 zum Einsatz kommen.

Obwohl anhand der Figuren das Aufnehmen und Auswerten eines Bildes der Stempel spitzen 14, insbesondere ihrer Stirnflächen 16, erläutert wurde, kann in gleicher Weise mit der Kamera auch eine Aufnahme anderer Abschnitte der Pressstempel, zum Beispiel des Stempelkopfes 12 und/oder des Stempelschafts 10, erfolgen, die dann in der erläuterten Weise ausgewertet werden. Auch eine Aufnahme und Bewertung von mit den Pressstempeln verbundener weiterer Komponenten, wie Faltenbälgen oder Staubschutzkappen, ist wie erläutert auf diese Weise möglich.

### Bezugszeichenliste

- 10: Stempelschaft
- 12: Stempelkopf
- 14: Stempelspitze
- 16: Stirnfläche (Pressfläche)
- 18: ringförmiger flacher Abschnitt (Randbreite)
- 20: konkaver Abschnitt (Pressfläche ohne Randbreite)
- 22: Kamera
- 23: Sichtfeld
- 24: Verbindung
- 26: Auswerteeinrichtung
- 28: Mittelpunkt
- 30: Viereck
- 32: Maxima
- 34: Maxima
- 36: Cluster
- 38: Cluster
- 40: Cluster
- 42: Cluster

## Patentansprüche

1. Verfahren zum Bewerten des Zustands eines Pressstempels einer Rundläuferpresse, wobei der Pressstempel einen Stempelschaft (10) aufweist, an dessen einem Ende ein im Betrieb mit einer Druckeinrichtung der Rundläuferpresse zusammenwirkender Stempelkopf (12) und an dessen anderem Ende eine im Betrieb ein Material in einer Kavität einer Matrizenscheibe der Rundläuferpresse zu einem Pressling verpressende Stempelspitze (14) angeordnet ist, wobei das Verfahren die folgenden Schritte umfasst:
• mit einer Kamera (22) wird ein Bild mindestens eines Abschnitts des Pressstempels aufgenommen,
• das aufgenommene Bild wird einer Auswerteeinrichtung (26) zugeführt,
• die Auswerteeinrichtung (26) führt mittels eines Bildverarbeitungsalgorithmus eine Zustandsanalyse des mindestens einen Abschnitts des Presstempels durch und bewertet auf Grundlage der Zustandsanalyse den Zustand des Pressstempels,
• sofern der durch die Auswerteeinrichtung (26) bewertete Zustand des Pressstempels außerhalb eines zulässigen Bereichs liegt, gibt die Auswerteeinrichtung (26) eine Warnmeldung aus.

2. Verfahren nach einem der vorhergehenden Ansprüche, **dadurch gekennzeichnet, dass** die Zustandsanalyse mittels eines Bildverarbeitungsalgorithmus einen Vergleich des aufgenommenen Bildes mit mindestens einem Referenzbild umfasst, wobei vorzugsweise das mindestens eine Referenzbild mindestens ein Referenzbild des mindestens einen Abschnitts eines unbenutzten Pressstempels ist und/oder dass das mindestens eine Referenzbild mindestens ein Referenzbild des mindestens einen Abschnitts des zu bewertenden Pressstempels vor dem letzten Produktionsprozess des zu bewertenden Pressstempels in der Rundläuferpresse ist.

3. Verfahren nach einem der vorhergehenden Ansprüche, **dadurch gekennzeichnet, dass** die Zustandsanalyse mittels eines Bildverarbeitungsalgorithmus das Extrahieren eines Bereichs von Interesse aus dem aufgenommenen Bild umfasst, wobei der Bereich von Interesse vorzugsweise die Stirnfläche (16) der Stempelspitze (14) ist und/oder dass das aufgenommene Bild ein Farbbild ist, und dass die Zustandsanalyse mittels eines Bildverarbeitungsalgorithmus eine Grauskalierung des Farbbildes umfasst und/oder dass die Zustandsanalyse mittels eines Bildverarbeitungsalgorithmus die Umwandlung des aufgenommenen Bildes in ein Binärbild umfasst.

4. Verfahren nach einem der vorhergehenden Ansprüche, **dadurch gekennzeichnet, dass** der mindestens eine Abschnitt des Pressstempels die Stirnfläche (16) der Stempelspitze (14) des Pressstempels ist.

5. Verfahren nach Anspruch 4, **dadurch gekennzeichnet, dass** die Zustandsanalyse mittels eines Bildverarbeitungsalgorithmus die Ermittlung eines Mittelpunktes (28) der aufgenommenen Stirnfläche (16) der Stempelspitze (14) umfasst.

6. Verfahren nach Anspruch 5, **dadurch gekennzeichnet, dass** die Zustandsanalyse mittels eines Bildverarbeitungsalgorithmus die Transformation der Koordinaten des aufgenommenen Bildes in ein Polarkoordinatensystem umfasst.

7. Verfahren nach einem der Ansprüche 4 bis 5, **dadurch gekennzeichnet, dass** die Stirnfläche (16) der Stempelspitze (14) in ihrem äußeren Bereich einen ringförmigen flachen Abschnitt (18) aufweist, und dass die Zustandsanalyse mittels eines Bildverarbeitungsalgorithmus das Identifizieren einer äußeren und inneren Grenze des ringförmigen flachen Abschnitts (18) umfasst.

8. Verfahren nach Anspruch 7, **dadurch gekennzeichnet, dass** die Zustandsanalyse mittels eines Bildverarbeitungsalgorithmus weiterhin das Ermitteln eines Abstands zwischen der äußeren und inneren Grenze über den Umfang des ringförmigen flachen Abschnitts (18) umfasst.

9. Verfahren nach einem der Ansprüche 7 oder 8, **dadurch gekennzeichnet, dass** die äußere und innere Grenze des ringförmigen flachen Abschnitts (18) durch Ermitteln von Maxima (32, 34) in dem im Rahmen der Zustandsanalyse verarbeiteten Bild identifiziert werden.

10. Verfahren nach einem der vorhergehenden Ansprüche, **dadurch gekennzeichnet, dass** die Zustandsanalyse mittels eines Bildverarbeitungsalgorithmus das Verwenden eines Canny-Algorithmus umfasst und/oder dass die Zustandsanalyse mittels Algorithmen des maschinellen Lernens durchgeführt wird.

11. Verfahren nach einem der vorhergehenden Ansprüche, **dadurch gekennzeichnet, dass** die Zustandsanalyse mittels eines Bildverarbeitungsalgorithmus das Detektieren von Anomalien auf dem mindestens einen Abschnitt des Pressstempels umfasst, wobei vorzugsweise zum Detektieren von Anomalien auf dem mindestens einen Abschnitt des Pressstempels ein Bildverarbeitungsalgorithmus zur Cluster-Analyse verwendet wird.

12. Verfahren nach einem der vorhergehenden Ansprüche, **dadurch gekennzeichnet, dass** der zu bewertende Pressstempel während der Durchführung des Verfahrens in der Rundläuferpresse montiert ist oder dass der zu bewertende Pressstempel während der Durchführung des Verfahrens in einer Halterung außerhalb der Rundläuferpresse gehalten ist, insbesondere in einer Wascheinrichtung für die Pressstempel der Rundläuferpresse.

13. Verfahren nach Anspruch 12, **dadurch gekennzeichnet, dass** die Kamera (22) an einem in einen Pressraum der Rundläuferpresse bewegbaren Haltearm gehalten wird.

14. Verfahren nach Anspruch 13, **dadurch gekennzeichnet, dass** der Rotor zur Bewertung der Pressstempel der Rundläuferpresse sukzessive derart gedreht wird, dass die mindestens einen Abschnitte der Pressstempel der Rundläuferpresse nacheinander von der Kamera (22) aufgenommen werden.

15. Vorrichtung zum Durchführen des Verfahrens nach einem der vorhergehenden Ansprüche, umfassend eine Kamera (22) zum Aufnehmen eines Bildes mindestens eines Abschnitts des Pressstempels sowie eine Auswerteeinrichtung (26), die dazu ausgebildet ist, mittels mindestens eines Bildverarbeitungsalgorithmus eine Zustandsanalyse dem mindestens einen Abschnitt des Presstempels durchzuführen und auf Grundlage der Zustandsanalyse den Zustand des Pressstempels zu bewerten, und die weiter dazu ausgebildet ist, eine Warnmeldung auszugeben, sofern der durch die Auswerteeinrichtung (26) bewertete Zustand des Pressstempels außerhalb eines zulässigen Bereichs liegt.
